# FASCICULE DE BREVET EUROPEEN

(11) **EP 3 312 552 B1**
(45) Date de publication et mention de la délivrance du brevet: **19.05.2021**
(21) Numéro de dépôt: 17196741.7
(22) Date de dépôt: 17.10.2017
(51) Int. Cl.: G01B 11/12, G01B 11/255

(54) **SYSTÈME ET MÉTHODE DE MESURE SANS CONTACT DE PARAMÈTRES GÉOMÉTRIQUES CIRCULAIRES D ÉLÉMENTS DE TURBOMACHINE**
VORRICHTUNG UND VERFAHREN ZUR KONTAKTLOSEN MESSUNG VON GEOMETRISCHEN KREISPARAMETERN VON ELEMENTEN EINER STRÖMUNGSMASCHINE
SYSTEM AND METHOD FOR CONTACTLESS MEASUREMENT OF CIRCULAR GEOMETRIC PARAMETERS OF TURBINE ENGINE ELEMENTS

(30) Priorité: 18.10.2016 BE 201605776
(43) Date de publication de la demande: 25.04.2018
(73) Titulaire: SAFRAN AERO BOOSTERS S.A., 4041 Herstal (BE)
(72) Inventeur: Assemat, Romain, 4000 Liège (BE); Lorange, Jean-Michel, 4602 Cheratte (BE)
(74) Mandataire: Gevers Patents

(56) Documents cités:
- WO-A1-2011/152797
- CN-A- 104 180 763
- US-A- 4 798 469
- US-A- 5 568 260

## Description

### Domaine technique

Selon un premier aspect, l'invention se rapporte à un système de mesure sans contact d'une pluralité paramètres géométriques circulaires intérieurs d'éléments de turbomachine.

Selon un deuxième aspect, l'invention se rapporte à une méthode de détermination sans contact de diamètres intérieurs d'éléments de turbomachine.

### Etat de la technique

Les turbomachines permettent un transfert d'énergie entre une partie solide tournante et un fluide. Les turbomachines intègrent des éléments rotatifs (rotor) de forme circulaire et nécessitent également des éléments fixes (stator) permettant de recevoir ces éléments rotatifs. Les éléments fixes de turbomachines peuvent être caractérisés par leurs diamètres intérieurs. Dans des applications de type turbine à gaz ou turboréacteur par exemple, le contrôle d'un ou plusieurs diamètres intérieurs des éléments fixes est primordial afin de minimiser l'espacement entre l'élément rotatif et l'élément fixe.

Les diamètres intérieurs d'éléments de turbomachines peuvent dépasser le mètre et requièrent une précision de l'ordre du micromètre à la dizaine de micromètre. Les éléments de turbomachines, par exemple les viroles internes d'un turboréacteur disposent bien souvent de diamètres intérieurs qui varient en fonction de la profondeur de l'élément. Dans le cas des viroles internes de turbomachines, elles sont fabriquées en métal et disposent sur leurs parois intérieures d'une piste composée d'un matériau plastique. Les diamètres intérieurs des viroles de turbomachines sont souvent mesurés au niveau de la piste composée d'un matériau plastique.

La mesure des diamètres intérieurs d'éléments de turbomachine est nécessaire afin de s'assurer du respect des côtes lors de leurs fabrications et dans une démarche de contrôle qualité. La mesure des diamètres intérieurs des éléments fixes de turbomachines est effectuée en général à l'aide de règles munies de palpeurs. Les palpeurs sont munis de pointes qui sont mises en contact avec l'élément à mesurer. Plusieurs diamètres d'un même élément de turbomachine sont en général mesurés à différentes hauteurs d'un élément de turbomachine. Un ensemble d'une règle munie de palpeurs est nécessaire pour la mesure de chacune des hauteurs désirées. Le contrôle d'un élément de turbomachine nécessite le contrôle du diamètre intérieur sur deux à quatre hauteurs et nécessite ainsi d'avoir à disposition de deux à quatre ensembles de règles munies de palpeurs. Les règles requièrent également un étalonnage régulier qui nécessite un étalon particulier à chacun des ensembles de règles munies de palpeurs.

Les inconvénients associés à la mesure par règles munies de palpeurs est qu'elle nécessite un grand nombre d'ensembles de règles munies de palpeurs afin de pouvoir mesurer les diamètres intérieurs à plusieurs hauteurs pour des éléments de turbomachine différents. Ceci implique que pour mesurer plusieurs diamètres d'un même élément, la mesure est effectuée en positionnant l'une après l'autres chacune des règles munies de palpeurs correspondant au diamètre à mesurer à des hauteurs différentes. De plus, le contact entre la pointe du palpeur et la piste en matière plastique du diamètre intérieur à mesurer peut engendrer une incertitude de mesure due à la pénétration du palpeur dans la piste en matière plastique. L'incertitude de mesure induite nécessite la réalisation d'un grand nombre de mesures afin d'obtenir une moyenne des mesures effectuées. La réalisation d'un grand nombre de mesure permet de s'affranchir en partie de l'incertitude sur la mesure mais est très demandeuse en temps et en manipulation des équipements de mesure.

US 5 568 260 décrit un système de mesure de précision sans contact comprenant un capteur optique pour déterminer le diamètre externe d'une pièce courbe montée sur un dispositif rotatif de précision. Le dispositif rotatif de précision comprenant un plateau sur lequel la pièce est disposée et un générateur de signal pour générer un signal pour chaque position de rotation de la pièce tout au long de 360 ° de rotation.

US 4 798 469 décrit des procédés et un appareil permettant de déterminer les caractéristiques spatiales d'un objet, telles que la taille, la forme et les emplacements relatifs de parties sélectionnées de l'objet, en utilisant un système de mesure sans contact qui dirige la lumière provenant d'une source telle qu'un faisceau laser collimaté pour éclairer une petite zone sur des parties sélectionnées de l'objet afin d'en mesurer une coordonnée.

CN104180763A décrit un appareil de mesure sans contact de diamètres intérieur et extérieur d'un composant de type anneau circulaire de grand diamètre.

### Résumé de l'invention

Selon un premier aspect, un des buts de l'invention est de fournir un système de mesure sans contact de paramètres géométriques circulaires d'éléments de turbomachine qui permette d'effectuer des mesures plus rapide et moins fastidieuse à mettre en œuvre. A cette fin, les inventeurs proposent un système de mesure sans contact selon la revendication 1.

Le système de mesure sans contact de l'invention permet de réaliser des mesures de paramètres géométriques d'éléments de turbomachine en positionnant l'élément de turbomachine sur le support et en activant le dispositif de mesure optique ainsi que l'unité de conversion électronique. Le dispositif de mesure optique, couplé à l'unité de conversion électronique permet de déterminer une ou plusieurs distances entre une paroi de l'élément de turbomachine et le dispositif de mesure optique. Par exemple, une mesure par triangulation du faisceau lumineux émis et du faisceau lumineux réfléchis permettent de déterminer une ou plusieurs distances tel que décrit ci-avant.

L'avantage de ce système de mesure sans contact est qu'il permet d'être utilisé pour la mesure de paramètres géométrique circulaires et de diamètres intérieurs d'éléments de turbomachine ayant des formes et des dimensions très différentes. Ce système de mesure sans contact permet également une mesure de diamètres intérieurs sur différentes hauteurs d'un même élément de turbomachine. La mesure de diamètres intérieurs sur plusieurs hauteurs est particulièrement intéressant pour des pièces ayant des formes coniques tel que certains éléments de turbomachine. Ce système de mesure sans contact permet un positionnement rapide et une mesure rapide car il est sans contact et ne nécessite donc pas de phase de prise de mesure avec des palpeurs très couteuse en temps. Ce système de mesure sans contact offre moins de risques d'endommager un élément de turbomachine avec les pointes dont sont munies les palpeurs. Il permet une meilleure reproductibilité d'une mesure car il permet de s'affranchir de l'erreur sur la mesure causée par la pénétration des pointes des palpeurs dans la piste silicone dont le diamètre est mesuré.

Un autre avantage de ce système de mesure sans contact est que le dispositif de mesure optique est positionné à l'intérieur de l'élément de turbomachine, ce qui permet une mesure directe de paramètres géométriques d'éléments intérieurs de l'élément de turbomachine. De préférence, ce système de mesure est bien adapté pour la mesure d'éléments de turbomachine ayant une paroi intérieure relié à une paroi extérieur par un élément radial. En effet ce type d'élément du turbomachine ne permet pas une mesure de la paroi intérieure par une mesure de la paroi extérieur, par exemple une mesure de dimensions extérieures, en connaissant une épaisseur de paroi permet de déduite une dimension intérieure. Cependant cette technique n'est pas compatible avec la mesure d'éléments de turbomachine ayant une paroi extérieure et une paroi intérieur reliée à la paroi extérieure par un élément radial.

Un avantage du système de mesure selon l'invention est que l'élément du turbomachine peut être positionné autour du dispositif de mesure optique par son ouverture basse ou ouverture positionnée en bas. Cette configuration de système de mesure est plus facilement transposable aux modes de production et de manutention déjà implémenté pour ce type d'éléments de turbomachine. L'avantage que le dispositif de mesure optique soit mécaniquement couplé au support par l'ouverture basse de l'élément de turbomachine plutôt que par l'ouverture haute permet d'avoir un système plus compact, moins complexe et ne nécessitant pas d'éléments mobiles complexes et engendrant des incertitudes de mesures.

Un avantage du système de l'invention est qu'il permet la prise de mesure d'éléments de turbomachine sans avoir à déplacer l'élément de turbomachine lorsqu'il est en position sur le support. Le dispositif de mesure optique permet d'envoyer des faisceaux lumineux sur différentes parties à l'intérieur de l'élément de turbomachine. Ceci permet par exemple d'avoir un dispositif de mesure optique disposant de moyens de déplacement rotatif ou en translation du dispositif de mesure optique plus précis et moins coûteux que des moyens de déplacement destinés à déplacer le support supportant l'élément de turbomachine. En plus, le support ne doit pas être déplacé pour mesurer au moins un paramètre géométrique circulaire. Ceci permet de préférence d'avoir une tour sans moyen de déplacement, la tour étant fixe par rapport au support. Un autre avantage de la tour selon l'invention est que cette tour permet de mesurer la surface interne 5 de la paroi interne 4 sans avoir besoin d'inter-changer ou de sélectionner un composant optique permettant de s'assurer du bon envoi et de la bonne collection d'un faisceau lumineux pour la mesure d'un paramètre géométrique circulaire. Le système de l'invention ne dispose pas d'éléments interchangeable.

De préférence, le dispositif de mesure optique est traversé par ledit axe de symétrie de révolution.

Préférentiellement, le dispositif de mesure optique et ledit support sont couplés de manière inamovible.

Dans un mode de réalisation particulier de l'invention, le dispositif de mesure optique n'a pas besoin d'être centré par rapport à l'élément de turbomachine.

De préférence, le support a une position fixe.

Un avantage supplémentaire est que le support n'a pas besoin d'être rotatif et est de préférence fixe. Cela permet d'avoir un système plus simple et ne nécessite pas de support rotatif et ou translatable pouvant recevoir un élément de turbomachine lourd et encombrant.

De préférence, le dispositif de mesure optique comprend en outre une deuxième source lumineuse ou une deuxième et une troisième sources lumineuses pour envoyer plusieurs faisceaux lumineux additionnels sur au moins ladite surface interne de ladite paroi latérale intérieure et un deuxième capteur optique ou un deuxième et un troisième capteurs optiques pour acquérir plusieurs réflexions issues desdits plusieurs faisceaux lumineux additionnels envoyés par ladite deuxième source lumineuse ou par lesdites deuxième et troisième sources lumineuses, supportés par lesdits moyens de support mécanique et étant aptes à être insérés dans ledit creux interne ouvert, et en ce que ladite unité de conversion électronique est en outre configurée pour convertir lesdits plusieurs signaux desdits deuxièmes et troisièmes capteurs optiques en plusieurs valeurs de ladite pluralité de paramètres géométriques circulaires intérieurs.

De préférence, les deuxième et ou troisième sources lumineuses et capteurs permettent de réaliser une mesure de paramètres géométrique circulaire intérieur plus rapidement, avec plus de précision et sans nécessité par exemple d'étape de centrage. Par exemple il existe une pluralité de sources lumineuses et de capteurs optiques qui se comportent de la même manière que la première et la deuxième source lumineuse.

De préférence, ladite pluralité de paramètres géométriques circulaires intérieurs permet la détermination d'un diamètre intérieur dudit élément de turbomachine présentant un axe de symétrie de révolution.

De préférence, ledit élément de turbomachine est un étage statorique d'une turbomachine, en ce que ladite paroi latérale extérieure est une virole extérieure, en ce que ladite paroi latérale intérieure est une virole interne et en ce que ledit élément radial est une aube.

De préférence, la surface interne est revêtue au moins partiellement d'une piste en matière plastique.

Une mesure optique est particulièrement bien adaptée pour la prise de dimension sur des matériaux présentant une réflexion diffuse plutôt qu'une réflexion spéculaire. La piste en matière plastique, par exemple de type silicone est préférentiellement d'un aspect noir et mat ce qui rend l'utilisation d'une mesure optique pour la prise des dimensions de la piste silicone d'autant plus intéressante pour obtenir des résultats précis et répétables. Une mesure optique pour la prise de dimension d'un matériau en matière plastique (polymère) est d'autant plus avantageuse qu'une prise de dimension en utilisant des palpeurs car elle permet de s'affranchir d'erreurs de mesures engendrées par l'interaction des palpeurs avec la piste en matière plastique.

Préférentiellement, le système de mesure sans contact comprend en outre un bras robotisé et des moyens de support mécaniques mécaniquement couplés audit support par ledit bras robotisé.

Selon un deuxième aspect, un des buts de l'invention est de fournir une méthode selon la revendication 9.

Les variantes et avantages mentionnés pour le premier aspect de l'invention s'applique à la méthode suivant le deuxième aspect, mutadis mutandis.

L'avantage de cette méthode est qu'elle permet de déterminer un paramètre géométrique circulaire et plus particulièrement un diamètre d'un élément de turbomachine de plusieurs modèles et de plusieurs tailles en utilisant un même système de mesure sans contact. Cette méthode permet également de s'affranchir de l'incertitude de mesure due à la pénétration des pointes du palpeur dans la piste en matière plastique situé sur la paroi interne de l'élément de turbomachine. En effet, l'utilisation d'un système de mesure sans contact ne présente pas les inconvénients lié aux palpeurs lors de la mesure de matériaux plastiques. Cette méthode permet une plus grande plage de mesure de paramètres géométriques circulaires intérieurs en comparaison de la mesure par palpeurs. La méthode de mesure utilisant un système de mesure sans contact ne nécessite pas de banc d'étalonnage spécifique à un paramètre géométrique circulaire intérieur particulier à mesurer. Cette méthode permet de déterminer des paramètres géométriques circulaires intérieurs et plus particulièrement un diamètre intérieur d'une section d'un élément de turbomachine selon un plan perpendiculaire à un axe de symétrie de révolution de l'élément de turbomachine.

Cette méthode permet une meilleure répétabilité par rapport à une mesure de paramètres géométrique circulaire intérieur et plus particulièrement un diamètre intérieur effectuée avec une règle munie de palpeurs car cette méthode ne présente pas de contact entre la partie de l'élément à mesurer et le dispositif de mesure optique.

Cette méthode permet une meilleure reproductibilité d'une même mesure d'un élément de turbomachine car elle permet de limiter les variations dues à l'intervention d'un opérateur telles que la pénétration des palpeurs dans la piste silicone due à la force appliquée par un opérateur.

L'avantage de cette méthode est qu'elle permet de mesurer un diamètre intérieur d'un élément de turbomachine de plusieurs modèles et de plusieurs tailles en utilisant un même système de mesure sans contact. Cette méthode permet de mesurer une multitude de paramètres géométriques circulaires intérieurs et de déterminer une valeur de diamètre intérieur. Cette méthode permet de s'assurer que la valeur de diamètre intérieur mesurée est bien une valeur de diamètre intérieur et non un paramètre géométrique circulaire intérieur tel une corde.

Selon un deuxième aspect, un des buts de l'invention est de fournir une méthode pour déterminer une pluralité de diamètres d'un élément de turbomachine présentant un axe de symétrie de révolution, et comprenant :
- une paroi latérale extérieure symétrique autour dudit axe de révolution et délimitant un creux ouvert dudit élément de turbomachine ;
- une paroi latérale intérieure symétrique autour dudit axe de révolution, située dans ledit creux ouvert, reliée à ladite paroi latérale extérieure par un élément radial et comprenant une surface interne délimitant un creux interne ouvert de l'élément de turbomachine ;
ladite pluralité de diamètres étant déterminée dans différents plans perpendiculaires audit axe de symétrie de révolution ;
ladite méthode comprenant les étapes de la revendication précédente et comprenant en outre les étapes suivantes :
I. configurer la première source lumineuse pour envoyer un faisceau à un endroit de la surface interne différent de l'endroit sur lequel le faisceau lumineux généré à l'itération de l'étape e. précédente est envoyé et configurer le premier capteur optique pour acquérir la réflexion dudit faisceau optique envoyé audit endroit de la surface interne différent, dans un plan parallèle audit axe de symétrie de révolution ;
m. exécuter les étapes a. à k. de la revendication précédente ;
n. répéter les étapes I. à m. M fois où M est un entier ;
o. fournir des valeurs de ladite pluralité de diamètres intérieurs de l'élément de turbomachine dans lesdits différents plans perpendiculaires audit axe de symétrie de révolution et correspondant aux différents endroits le long dudit axe de symétrie de révolution imposés à l'étape I..

L'avantage de la méthode pour déterminer une pluralité de diamètres intérieurs proposée permet la mesure de plusieurs diamètres intérieurs à compris sur toute la hauteur d'un élément de turbomachine. Cette méthode permet d'éviter la manipulation de plusieurs outils de mesure pour la caractérisation ou le test d'un même élément de turbomachine nécessitant une mesure de diamètre intérieurs sur plusieurs hauteurs d'un élément de turbomachine. Cette méthode permet d'établir rapidement un profil du diamètre intérieur sur toute la hauteur du diamètre intérieur à déterminer.

De préférence, l'élément de turbomachine est un étage statorique d'une turbomachine, en ce que ladite paroi latérale extérieure est une virole extérieure, en ce que ladite paroi latérale intérieure est une virole interne et en ce que ledit élément radial est une aube.

De préférence, ledit support a une position fixe.

Préférentiellement, ladite méthode pour déterminer une pluralité de diamètres intérieurs d'un élément de turbomachine est caractérisée en ce que :
- la première source lumineuse est apte à être activé et à éclairer ladite surface interne à différents endroits pour une même position du dispositif de mesure optique ;
- le premier capteur optique est apte à acquérir lesdits signaux lumineux issu des réflexions desdits signaux lumineux généré par la première source lumineuse et en ce que ;
- l'étape g. consiste à convertir lesdits signaux de l'étape f. en une pluralité de valeurs dudit diamètre intérieur.

L'avantage de ce mode de réalisation préféré est que la méthode associée permet de mesurer une pluralité de paramètres géométriques circulaires intérieur d'un élément de turbomachine avec une même position du dispositif de mesure optique. Cette méthode permet une plus grande rapidité de mesure car elle peut mesurer une pluralité de paramètres géométriques circulaire intérieurs en l'absence de déplacement du dispositif de mesure optique. Cette méthode peut également permettre de mesurer au moins un diamètre intérieur sans effectuer de déplacement du dispositif de mesure optique. La pluralité de valeurs mesurées dudit paramètre géométrique circulaire intérieur pour une même position du dispositif de mesure optique permet de déterminer une valeur de diamètre intérieur.

Préférentiellement, l'étape c. de la méthode comprend les étapes suivantes :
- éclairer à l'aide de ladite première source lumineuse ladite paroi latérale extérieure ;
- acquérir à l'aide dudit premier capteur un signal lumineux de calibration issu d'une réflexion sur la paroi latérale extérieure du faisceau lumineux généré à l'étape précédente ;
- associer à une extrémité du signal lumineux de calibration de l'étape précédente une position dudit plan de référence.

L'avantage de cette méthode est qu'elle permet de déterminer un plan de référence grâce au dispositif de mesure sans contact. La détection par le premier capteur optique par exemple de l'extrémité de la paroi latérale extérieur ou par exemple de l'extrémité de la paroi latérale intérieure permet de définir une position du plan de référence sur l'extrémité de la paroi latérale intérieur ou de la paroi latérale extérieure. Un autre avantage de cette méthode est qu'elle permet en une seule mesure de mesurer un paramètre géométrique circulaire intérieur et un diamètre sans avoir au préalable déterminer de plan de référence. Cette méthode permet également de déterminer un paramètre géométrique circulaire intérieur et ou un diamètre intérieur très rapidement en comparaison d'une méthode utilisant une règle munie de palpeurs.

Préférentiellement, la surface interne est essentiellement revêtue d'une piste en matière plastique.

L'utilisation d'une mesure optique est particulièrement bien adaptée pour la prise de dimension sur des matériaux présentant une réflexion diffuse plutôt qu'une réflexion spéculaire. La piste en matière plastique, par exemple de type silicone est préférentiellement d'un aspect noir et mat ce qui rend l'utilisation d'une mesure optique des dimensions de la piste silicone d'autant plus intéressante pour obtenir des résultats précis et répétables.

De préférence, l'étape h. consiste à bouger ou à translater ladite première source lumineuse et ledit premier capteur optique le long d'une ligne.

Dans un autre mode de réalisation, l'étape h. consiste à bouger ou à translater ladite première source lumineuse et ledit premier capteur optique le long d'au moins une portion de cercle.

De préférence, le dispositif de mesure optique comprend d'autres sources lumineuses additionnelles et d'autres capteurs optiques additionnels.

De préférence, l'étape g. utilise une méthode de triangulation.

De préférence, l'étape g. utilise une méthode de temps de vol.

L'utilisation d'un dispositif de mesure optique permet une mesure plus rapide de plusieurs diamètres intérieurs à plusieurs positions pour une même hauteur.

### Brève description des figures

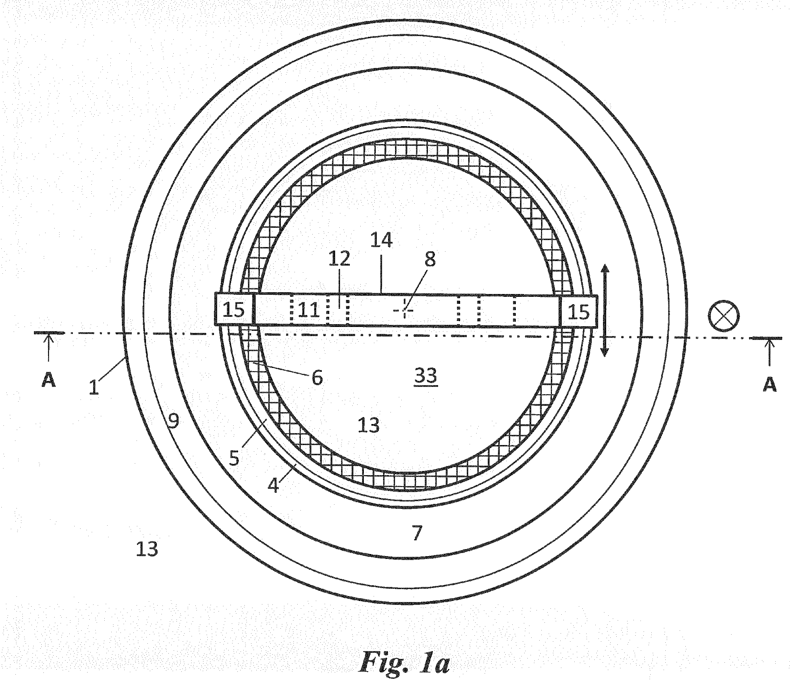

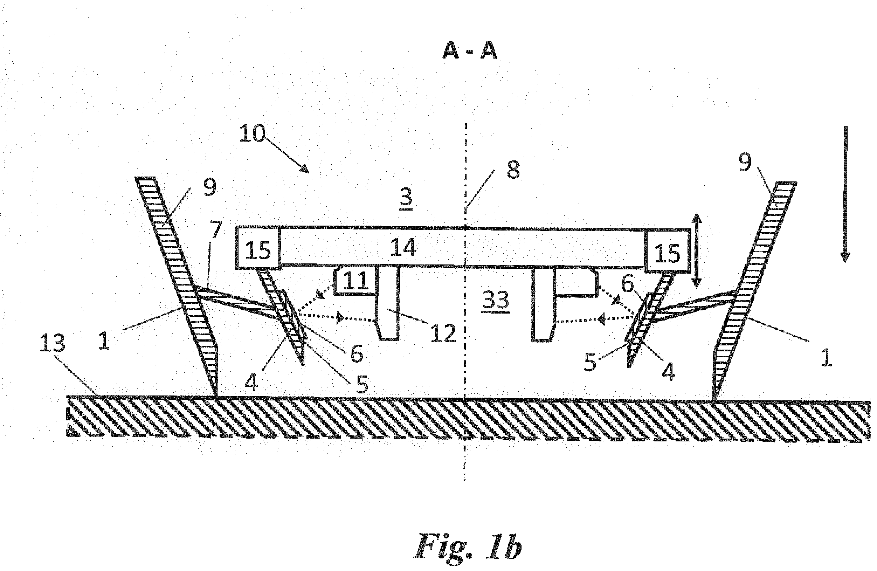

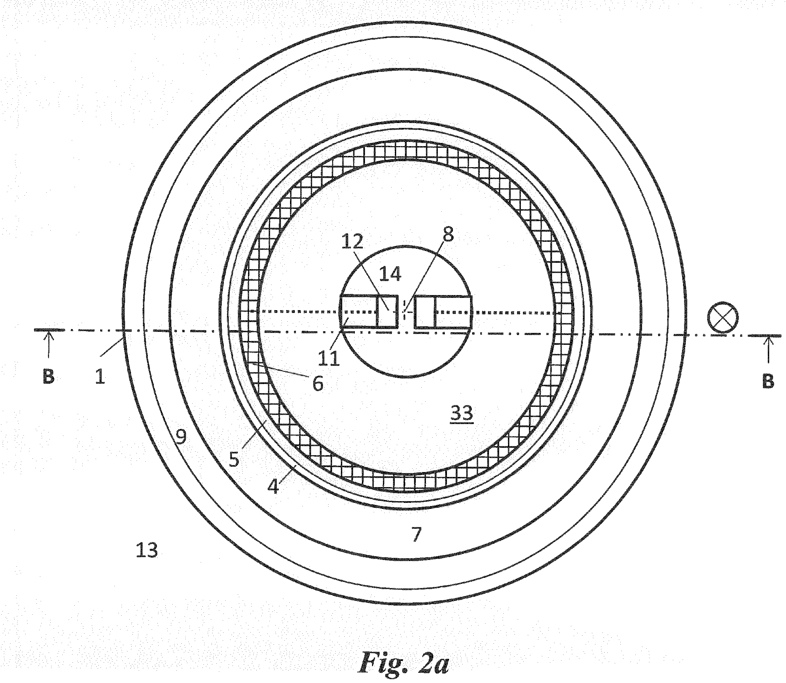

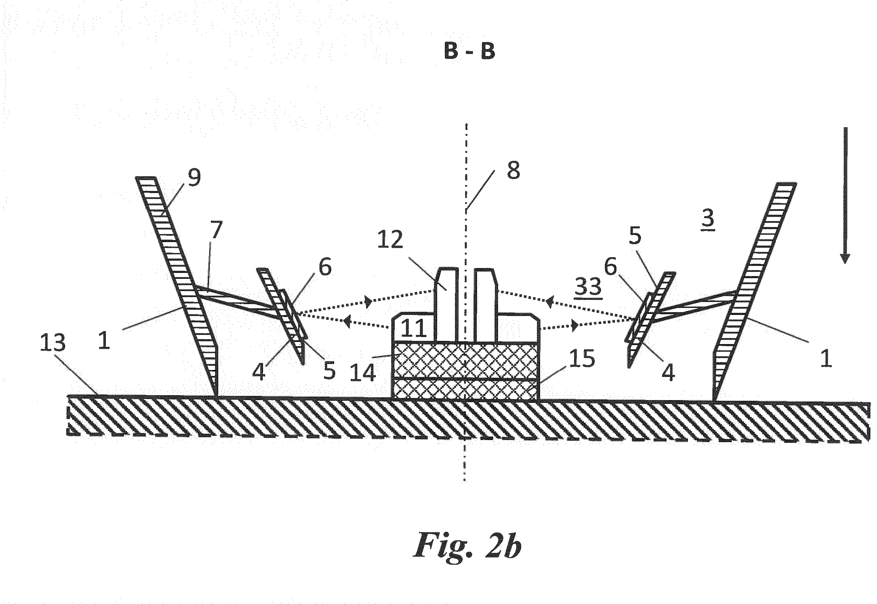

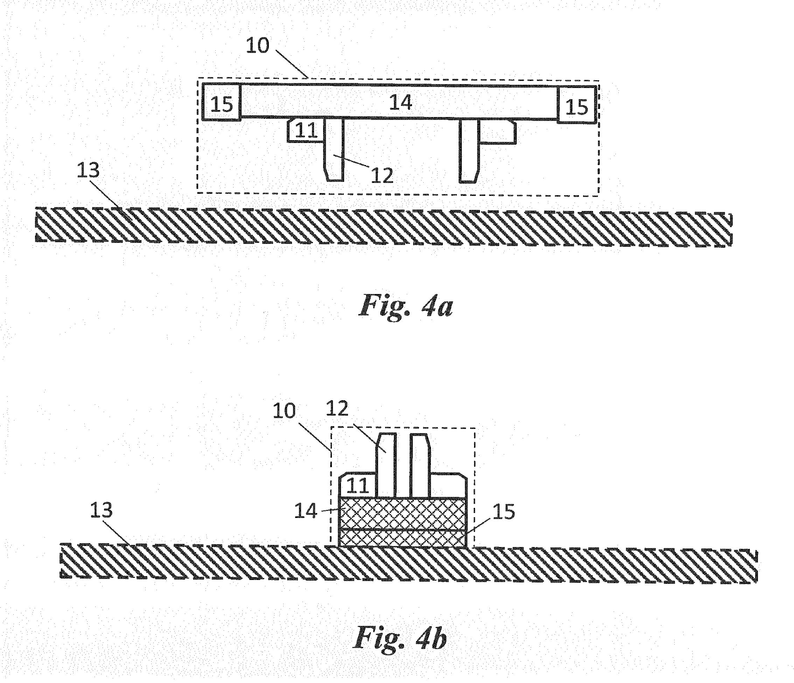

Les figures 1a, 1b et 4a n'appartiennent pas à l'invention revendiquée. Des modes de réalisation de l'invention sont illustrés en figures 2a, 2b, 2c, 3 et 4b.

Ces aspects ainsi que d'autres aspects de l'invention seront clarifiés dans la description détaillée de modes de réalisation particuliers de l'invention, référence étant faite aux dessins des figures, dans lesquelles:
- la Fig.1a montre un mode de réalisation d'une méthode et d'un dispositif non-revendiqués;
- la Fig.1b montre une vue en coupe (A-A) de l'élément de turbomachine et le positionnement du système de mesure optique correspondant au mode de réalisation de la méthode et du dispositif montré à la figure précédente;
- la Fig.2a montre un mode de réalisation de la méthode et du dispositif selon l'invention;
- la Fig.2b montre une vue en coupe correspondant au mode de réalisation de la méthode montrée à la figure précédente selon l'invention;
- la Fig.2c montre une vue en coupe correspondant au mode de réalisation de la méthode et du dispositif montré à la figure précédente selon l'invention;
- la Fig.3 montre un mode de réalisation de la méthode et du dispositif;
- la Fig.4a montre un mode de réalisation non-revendiqué du système de mesure optique
- la Fig.4b montre un mode de réalisation du système de mesure optique ;

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

La figure 1a montre un exemple de mode de réalisation d'une méthode et d'un dispositif non-revendiqués. La méthode permettant la mesure d'un paramètre géométrique circulaire d'un élément de turbomachine 1, comprend l'étape de fournir un support 13 permettant le positionnement et le support d'un élément de turbomachine 1. Le support 13 a de préférence une surface plane qui peut être utilisée par exemple comme surface de référence. Le support 13 est par exemple un marbre. La méthode prévoit de fournir un élément de turbomachine 1 à mesurer et de le positionner sur le support 13. L'élément de turbomachine 1 peut être positionné sur le support 13 à une position libre dans la mesure ou l'élément de turbomachine 1 est suffisamment soutenu par le support 13 pour effectuer la mesure d'un paramètre géométrique circulaire, et par exemple d'un diamètre intérieur. Par exemple, l'élément de turbomachine 1 est positionné sur le support 13 à une position prédéfinie et au centre du support 13. De préférence, l'élément de turbomachine 1 est positionné suivant des repères visuels présents sur le support 13. Encore plus préférentiellement, l'élément de turbomachine 1 est positionné selon des butées présentes sur le support 13. L'élément de turbomachine 1 est de préférence positionné avec sa partie la plus resserrée au contact du support 13.

L'élément de turbomachine 1 est doté de sections circulaires et d'un axe de symétrie de révolution 8. L'élément de turbomachine 1 comprend autour de son axe de symétrie de révolution 8 une paroi latérale extérieure 9 aussi appelée virole externe et une paroi latérale intérieure 4 aussi appelée virole interne. Les parois latérales intérieure 4 et extérieure 9 sont reliées entre elles par un élément radial 7. L'élément radial 7 est de préférence une aube et est par exemple doté de parties évidées permettant le passage de l'air entre les parois latérales intérieure 4 et extérieure 9. Les parois latérales intérieure 4 et extérieure 9 délimitent latéralement un creux interne ouvert 33 et un creux ouvert 3 respectivement. Dans ce mode de réalisation particulier, le dispositif de mesure optique 10 est positionné sur la paroi latérale intérieure 4 aussi appelée virole intérieure de l'élément de turbomachine 1 à mesurer. La paroi latérale intérieure 4 dispose d'une surface interne 5 qui délimite latéralement le creux interne ouvert 33. Les plans délimitant les extrémités des parois latérales intérieure 4 et extérieure 9 sont de préférence perpendiculaires à l'axe de symétrie de révolution 8 et parallèles entre eux. L'élément de turbomachine 1 présente sur sa surface interne 5, une piste silicone 6. La piste silicone 6 est un revêtement en matériau plastique déposé sur la surface interne 5. Ce revêtement est de préférence en polymère et plus préférentiellement en polymère de type silicone. La piste silicone 6 couvre la surface interne latérale 5 de préférence en partie. Par exemple la piste silicone 6 couvre la surface interne latérale 5 en totalité. L'élément de turbomachine 1 est en matériau métallique à l'exception de la piste silicone 6.

Les moyens de support mécanique 14 permettent de coupler mécaniquement la première source lumineuse 11 et le premier capteur optique 12. Les moyens de support mécanique 14 sont par exemple une règle en carbone. Les moyens de support mécanique 14 disposent de préférence de moyens de couplage mécanique 15 qui permettent au moyen du support mécanique 14 d'être positionné de manière contrôlée par rapport à l'élément de turbomachine 1 à mesurer. Les moyens de support mécaniques 14 sont de préférence positionnés grâce aux moyens de couplage mécanique 15 sur les extrémités de la paroi latérale intérieure 4 de l'élément de turbomachine 1 à mesurer. Les moyens de support mécaniques 14 sont par exemple positionnés directement sur la paroi latérale intérieure 4. Les moyens de support mécanique 14 sont positionnés de tel sorte que la source lumineuse 11 et le capteur optique 12 sont positionné dans le creux ouvert 3 de l'élément de turbomachine 1 et de préférence dans le creux interne ouvert 33 lui-même délimité par la paroi latérale intérieure 4.

La méthode pour déterminer un paramètre géométrique circulaire d'un élément de turbomachine 1 prévoit, outre le fait de fournir un support 13 et de positionner l'élément de turbomachine 1 sur le support 13, de déterminer un plan de référence perpendiculaire à l'axe de symétrie de révolution 8. Le plan de référence est par exemple la surface du support 13. Le plan de référence 8 est préférentiellement déterminé à partir de l'élément de turbomachine 1. Le plan de référence est par exemple défini par une extrémité de la paroi latérale intérieure 4 ou extérieure 9. De préférence, l'intersection d'un plan de référence qui est perpendiculaire à l'axe de symétrie de révolution et la paroi latérale intérieure 4 ou extérieure 9 forme un cercle.

La méthode pour déterminer un paramètre géométrique circulaire d'un élément de turbomachine 1 prévoit de fournir un dispositif de mesure optique 10. Le dispositif de mesure optique 10 est composé d'une première source lumineuse 11 qui permet d'éclairer une partie de la surface interne 5. La source lumineuse 11 est par exemple un laser. La source lumineuse 11 permet préférentiellement d'éclairer la surface interne 5 en un point. Le signal lumineux qui éclaire une partie de la surface interne 5 est détecté par un premier capteur optique 12. Le premier capteur optique 12 et la première source lumineuse 11 sont couplés mécaniquement aux moyens de support mécanique 14. Le premier capteur optique 12 permet de détecter le signal lumineux qui est réfléchit sur la surface interne 5. La détection du signal lumineux par le premier capteur optique 12 permet de déterminer une première distance de la surface interne 5 par rapport audit plan de référence. De préférence, le premier capteur optique 12 permet de détecter une position du signal lumineux sur la surface interne 5. Par exemple, la position du signal lumineux sur la surface interne 5 permet de déterminer une distance par une méthode de triangulation. Par exemple, le premier capteur optique 12 et la première source lumineuse 11 permettent de déterminer une distance entre la surface interne 5 et le capteur optique par une méthode de temps de vol. La méthode nécessite d'activer la première source lumineuse 11 et le premier capteur optique 12 de façon coordonnée afin de pouvoir acquérir le signal lumineux émis par la première source lumineuse 11. Le signal acquis par le premier capteur optique 12 est converti en une valeur du paramètre géométrique circulaire. Cette conversion peut être effectuée grâce à une unité de conversion électronique 16. Le paramètre géométrique circulaire qui est déterminé par cette méthode est de préférence un diamètre. Le paramètre géométrique circulaire est par exemple un rayon, une corde, un périmètre ou une aire.

Une méthode pour déterminer un diamètre d'un élément de turbomachine 1 prévoit de déterminer le diamètre d'une section de l'élément de turbomachine 1. Le diamètre déterminé est par exemple le diamètre d'une section dans un plan perpendiculaire à l'axe de symétrie de révolution de la paroi latérale intérieure 4. Cette méthode prévoit d'effectuer successivement des mesures de paramètres géométriques circulaires dans un même plan perpendiculaire à l'axe de symétrie de révolution 8. Plusieurs mesures de paramètres géométriques circulaires sont effectuées dans un même plan en modifiant la position de la première source lumineuse 11 et du premier capteur optique 12 perpendiculairement à l'axe de symétrie de révolution 8. Pour chacune des positions des première source lumineuse 11 et premier capteur optique 12, la mesure d'un paramètre géométrique circulaire est effectuée. La position des première source lumineuse 11 et premier capteur optique 12 est par exemple modifiée selon une ligne. La position des première source lumineuse 11 et premier capteur optique 12 est par exemple modifiée par des moyens de translation linéaire. Les paramètres géométriques circulaires sont déterminés puis enregistrés pour chacune des positions des première source lumineuse 11 et premier capteur optique 12. Un diamètre d'un élément de turbomachine 1 est déterminé à partir de la valeur maximale du paramètre géométrique circulaire déterminés et enregistrés. De préférence la translation linéaire des première source lumineuse 11 et premier capteur optique 12 est effectuée d'une première position dans le creux interne ouvert 33 à une seconde position dans creux interne ouvert 33.

Une méthode pour déterminer une pluralité de diamètres d'un élément de turbomachine 1 prévoit de déterminer plusieurs diamètres correspondant à des sections dans des plans perpendiculaires à l'axe de symétrie de révolution de la paroi latérale intérieure 4 de préférence. Des moyens de translations permettent de déplacer les première source lumineuse 11 et premier capteur optique 12 parallèlement à l'axe de symétrie de révolution. Cette translation permet de déterminer plusieurs diamètres sur toute la hauteur de la paroi latérale intérieure 4. Cette translation permet également, par exemple de déterminer plusieurs diamètres sur toute la hauteur de la paroi latérale extérieure 9. La détermination de plusieurs diamètres dans des plans perpendiculaires à l'axe de symétrie de révolution 8 et sur toute la hauteur de la paroi latérale intérieure 4 permet par exemple d'établie un profil des diamètres de la paroi latérale intérieure 4. Un profil des diamètres est d'autant plus intéressant lorsque la paroi latérale intérieure 4 présente une conicité. Cette méthode permet de déterminer de préférence deux diamètres intérieurs de la paroi latérale intérieure 4, encore plus préférentiellement elle permet de déterminer quatre diamètres intérieurs dans des plans non confondus perpendiculaires à l'axe de symétrie de révolution. De préférence les diamètres sont déterminés à des intervalles réguliers le long de l'axe de symétrie de révolution.

La méthode pour déterminer une pluralité de paramètre géométriques circulaires d'un élément de turbomachine prévoir l'utilisation d'une première source lumineuse 11 qui est apte à éclairer la paroi latérale intérieure 4 sur sa surface interne 5 à différents endroits pour une même position de la première source lumineuse 11. Le premier capteur optique 12 permet de détecter le signal lumineux réfléchit de préférence sur la surface interne 5 pour une même position. La première source lumineuse 11 est de préférence un laser ligne qui permet d'envoyer une ligne sur la surface interne 5. La première source lumineuse 11 peut par exemple envoyer des points le long d'une ligne afin de pouvoir déterminer pour chacun des signaux lumineux de chaque point, un paramètre géométrique circulaire. La méthode permet de déterminer une pluralité de valeur du paramètre géométrique circulaire compris dans un plan perpendiculaire à l'axe de symétrie de révolution 8. La méthode permet également de déterminer une pluralité de valeur du paramètre géométrique circulaire compris dans un plan parallèle à l'axe de symétrie de révolution 8. Le premier capteur optique 12 est de préférence un détecteur qui permet de détecter le signal lumineux de type ligne ou étant composé d'une multitude de points en une acquisition. Le premier capteur optique 12 est par exemple un détecteur de type CCD.

Le premier capteur optique 12 et la première source lumineuse 11 qui permettent de déterminer une pluralité de paramètre géométriques circulaires avec une même position peuvent également être utilisés pour déterminer un plan de référence. Le plan de référence déterminé est de préférence une des extrémité de la paroi latérale intérieure 4. Le plan de référence est déterminé en envoyant une ligne ou un grand nombre de points, de préférence dans un plan parallèle à l'axe de symétrie de révolution 8 et en détectant le signal réfléchit sur la paroi latérale intérieur 4 par le premier capteur optique 12. Un point d'un plan de référence est déterminé à l'endroit où le faisceau lumineux n'est plus réfléchit ou est réfléchit avec un angle de réflexion différent car il éclaire au-delà de la paroi latérale intérieure 4. La détermination de plusieurs points correspondant à la même extrémité de la paroi latérale intérieure 4 permet de déterminer un plan de référence qui correspond à une extrémité de la paroi latérale intérieur 4. La détermination d'une extrémité du signal lumineux correspondant à une partie d'un élément utilisé comme plan de référence peut être obtenu en envoyant un signal lumineux de calibration généré par la première source lumineuse 11.

Le dispositif de mesure optique 10 peut comprendre d'autres sources lumineuse additionnelles et d'autres capteurs optiques additionnels. De préférence, le dispositif 10 comprend une deuxième source lumineuse et un deuxième capteur optique. Les deuxièmes source lumineuse et capteur optique sont de préférence identiques à la première source lumineuse 11 et au premier capteur optique 12. Les première 11 et deuxième sources lumineuses, de même que les premier 12 et deuxièmes capteurs optiques peuvent être positionnées afin d'éclairer avec un angle fixe la partie de l'élément de turbomachine 1 à mesurer. L'angle fixe est par exemple de 90°, 120 ° ou de 180°. Les premières 11 et deuxième sources lumineuses sont activées simultanément et les premier 12 et deuxième capteurs optiques permettent l'acquisition des faisceaux lumineux issus des première 11 et deuxième sources lumineuses.

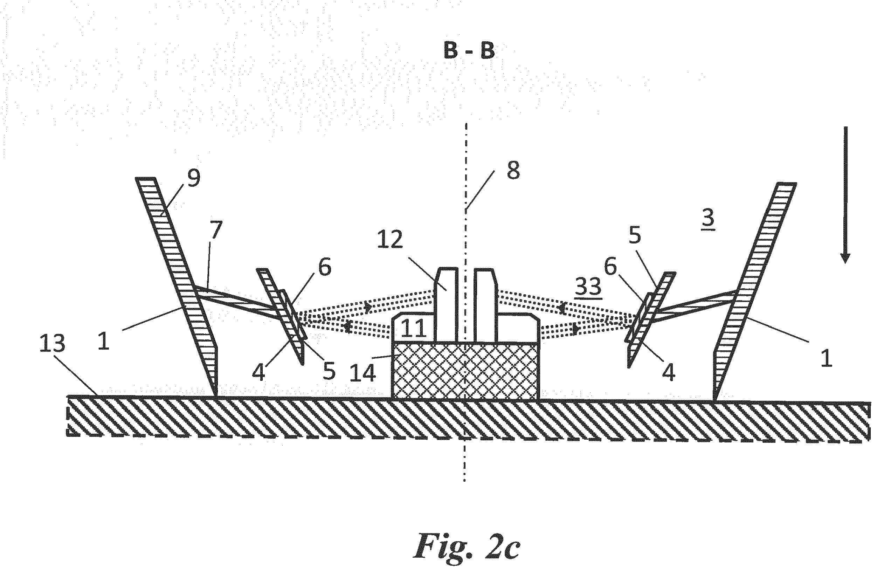

La Fig. 2c. montre une tour reposant sur le support 13, la tour comprenant au moins une source lumineuse 11 et au moins un capteur optique 12. Dans ce mode de réalisation la ou les source(s) lumineuse(s) est/sont configurée(s) pour éclairer la surface interne 5 de la paroi interne 4 avec une pluralité de faisceaux lumineux et ou pluralité de faisceaux lumineux additionnels.

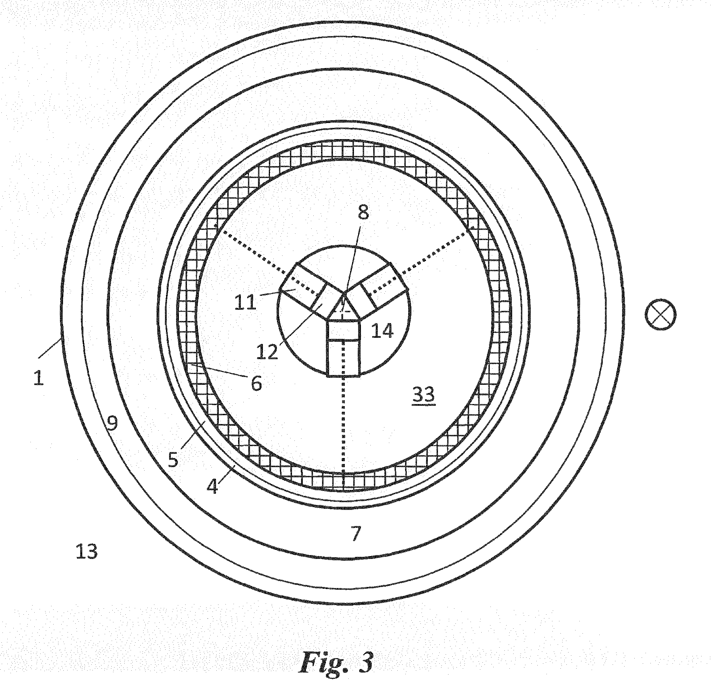

La figure 3 montre une mise en situation de la méthode pour mesurer un diamètre intérieur d'un élément de turbomachine 1. Le système de mesure optique 10 comprend en outre une deuxième et une troisième sources lumineuses et un deuxième et un troisième capteurs optiques positionnés à des positions angulaires différentes sur les moyens de support mécanique 14. Les trois ensembles composés d'une première 11, deuxième et troisième sources lumineuses et d'un premier, deuxième et troisième capteurs optiques sont positionnés à des intervalles angulaire de 120° par exemple. L'élément de turbomachine 1 est positionné autour du système de mesure optique 10. La mesure du diamètre intérieur d'une section parallèle au plan de référence est effectuée en positionnant le système de mesure optique 10 à la hauteur désirée.

La figure 4a montre un module de mesure sans contact comprenant un dispositif de mesure optique 10 et un support 13. Le dispositif de mesure sans contact 10 comprend des moyens de support mécaniques 14 qui permettent le couplage mécanique des première source lumineuse 11 et premier capteur optique 12 ainsi que d'autres sources lumineuses additionnelles et d'autres capteurs optiques. Les moyens de support mécanique 14 sont dotés de moyens de couplage mécanique 15 qui permettent un bon positionnement du dispositif de mesure optique 10 par rapport à l'élément de turbomachine 1 à mesurer. La première source lumineuse 11 et le premier capteur optique 12 peuvent être positionnés le long des moyens de support mécanique 14.

La figure 4b montre le module de mesure sans contact compris dans l'invention comprenant un dispositif de mesure optique 10 et un support 13. Le dispositif de mesure optique 10 est une tour comprenant des moyens de support mécaniques 14 qui permettent le couplage mécanique des première source lumineuse 11 et premier capteur optique 12 ainsi que d'autres sources lumineuses additionnelles et d'autres capteurs optiques. Les moyens de support mécanique 14 par exemple sont dotés de moyens de couplage mécanique 15 qui permettent un bon positionnement du dispositif de mesure sans contact 10 par rapport à l'élément de turbomachine 1 à mesurer. La première source lumineuse 11 et le premier capteur optique 12 sont positionnés sur les moyens de support mécaniques 14. Dans le cas du dispositif de mesure optique 10 étant une tour, les moyens de support mécaniques 14 sont par exemple de forme cylindrique et sont positionnés de façon centré sur l'axe de symétrie de révolution 8 de l'élément de turbomachine 1 à mesurer.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Système de mesure sans contact (100) d'une pluralité de paramètres géométriques circulaires intérieurs d'un élément de turbomachine (1) présentant un axe de symétrie de révolution (8), comprenant :
- ledit élément de turbomachine (1) comprenant :
- une paroi latérale extérieure (9) symétrique autour dudit axe de symétrie de révolution (8) et délimitant un creux ouvert (3) dudit élément de turbomachine (1) ;
- une paroi latérale intérieure (4) symétrique autour dudit axe de symétrie de révolution (8), située dans ledit creux ouvert (3), reliée à ladite paroi latérale extérieure (9) par un élément radial (7) et comprenant une surface interne (5) délimitant un creux interne ouvert (33) de l'élément de turbomachine (1) ;
- un module de mesure sans contact comprenant :
- un support (13) pour supporter ledit élément de turbomachine (1) ;
- un dispositif de mesure optique (10) pour envoyer plusieurs faisceaux lumineux sur au moins ladite surface interne (5) de ladite paroi latérale intérieure (4) et acquérir plusieurs réflexions issues desdits plusieurs faisceaux lumineux, le dispositif de mesure optique (10) étant une tour, étant couplé mécaniquement audit support (13) et comprenant :
- une première source lumineuse (11) pour envoyer lesdits plusieurs faisceaux lumineux ;
- un premier capteur optique (12) pour acquérir lesdites plusieurs réflexions ;
- des moyens de support mécanique (14) positionnés de façon centrée sur l'axe de symétrie de révolution (8) de l'élément de turbomachine (1) à mesurer, pour supporter ladite première source lumineuse (11) et ledit premier capteur optique (12), lesdits moyens de support mécanique (14) étant en contact avec ledit support (13) et reposant sur ledit support (13) ;
- ladite première source lumineuse (11) et ledit premier capteur optique (12) étant aptes à être insérés dans ledit creux interne ouvert (33) ;
- une unité de conversion électronique (16) pour convertir plusieurs signaux dudit premier capteur optique (12) en plusieurs valeurs de ladite pluralité de paramètres géométriques circulaires intérieurs.

2. Système (100) selon la revendication précédente **caractérisé en ce que** ledit support (13) a une position fixe.

3. Système (100) selon l'une quelconque des revendications précédentes **caractérisé en ce que** le dispositif de mesure optique (10) comprend en outre une deuxième source lumineuse ou une deuxième et une troisième sources lumineuses pour envoyer plusieurs faisceaux lumineux additionnels sur au moins ladite surface interne (5) de ladite paroi latérale intérieure (4) et un deuxième capteur optique ou un deuxième et un troisième capteurs optiques pour acquérir plusieurs réflexions issues desdits plusieurs faisceaux lumineux additionnels envoyés par ladite deuxième source lumineuse ou par lesdites deuxième et troisième sources lumineuses, supportés par lesdits moyens de support mécanique (14) et étant aptes à être insérés dans ledit creux interne ouvert (33),
et **en ce que** ladite unité de conversion électronique (16) est en outre configurée pour convertir lesdits plusieurs signaux desdits deuxièmes et troisièmes capteurs optiques (12) en plusieurs valeurs de ladite pluralité de paramètres géométriques circulaires intérieurs.

4. Système (100) selon l'une quelconque des revendications précédentes **caractérisé en ce que** ladite pluralité de paramètres géométriques circulaires intérieurs permet la détermination d'un diamètre intérieur dudit élément de turbomachine (1) présentant un axe de symétrie de révolution (8).

5. Système (100) selon l'une quelconque des revendications précédentes **caractérisé en ce que** ledit élément de turbomachine (1) est un étage statorique d'une turbomachine, **en ce que** ladite paroi latérale extérieure (9) est une virole extérieure, **en ce que** ladite paroi latérale intérieure (4) est une virole interne et **en ce que** ledit élément radial (7) est une aube.

6. Système (100) selon l'une quelconque des revendications précédentes, **caractérisé en ce que** le dispositif de mesure optique (10) et ledit support (13) sont couplés de manière inamovible.

7. Système (100) selon l'une quelconque des revendications précédentes **caractérisé en ce que** le dispositif de mesure optique est traversé par ledit axe de symétrie de révolution (8).

8. Système (100) selon l'une quelconque des revendications précédentes **caractérisé en ce que** la surface interne (5) est revêtue au moins partiellement d'une piste (6) en matière plastique.

9. Méthode pour déterminer un diamètre intérieur d'un élément de turbomachine (1) présentant un axe de symétrie de révolution (8) et comprenant :
- une paroi latérale extérieure (9) symétrique autour dudit axe de symétrie de révolution (8) et délimitant un creux ouvert (3) dudit élément de turbomachine (1) ;
- une paroi latérale intérieure (4) symétrique autour dudit axe de symétrie de révolution (8), située dans ledit creux ouvert (3), reliée à ladite paroi latérale extérieure (9) par un élément radial (7) et comprenant une surface interne (5) délimitant un creux interne ouvert (33) de l'élément de turbomachine (1) ;
ladite méthode comprenant les étapes suivantes :
a. fournir un support (13) pour supporter ledit élément de turbomachine (1) et un dispositif de mesure optique (10), qui est une tour, et qui comprend:
- une première source lumineuse (11) pour envoyer au moins un faisceau lumineux ;
- un premier capteur optique (12) pour détecter au moins un signal lumineux issu de la première source lumineuse (11) ;
- des moyens de support mécaniques (14) positionnés de façon centrée sur l'axe de symétrie de révolution (8) de l'élément de turbomachine (1) à mesurer, supportant ladite première source lumineuse (11) et ledit premier capteur optique (12), les moyens de support mécanique (14) étant en contact avec ledit support (13) et reposant sur ledit support (13) ;
b. positionner ledit élément de turbomachine (1) sur ledit support (13) de sorte que ladite première source lumineuse (11) soit apte à éclairer au moins partiellement ladite surface interne (5) ;
c. déterminer un plan de référence perpendiculaire audit axe de symétrie de révolution (8) ;
d. déterminer une première distance par rapport audit plan de référence correspondant à un endroit de ladite surface interne (5) éclairé par ladite première source lumineuse (11) ;
e. activer ladite première source lumineuse (11) pour envoyer un faisceau lumineux sur ladite surface interne (5) ;
f. acquérir via ledit premier capteur optique (12) un signal lumineux issu de la réflexion dudit faisceau lumineux généré à l'étape précédente ;
g. convertir le signal obtenu à l'étape précédente en une valeur de paramètre géométrique circulaire intérieur à ladite première distance par rapport audit plan de référence déterminée à l'étape d.
h. configurer la première source lumineuse (11) pour envoyer un faisceau à un endroit de la surface interne (5) différent de l'endroit sur lequel le faisceau lumineux généré à l'itération de l'étape e. précédente est envoyé et configurer le premier capteur optique (12) pour acquérir la réflexion dudit faisceau optique envoyé audit endroit de la surface interne (5) différent, dans un plan perpendiculaire audit axe de symétrie de révolution (8) ;
i. répéter les étapes e. à g. ;
j. répéter les étapes h. et i. N fois où N est un entier ;
k. déterminer le diamètre intérieur à partir d'une valeur maximale de ladite valeur du paramètre géométrique circulaire intérieur déterminée à l'étape g. de chaque itération ;
ledit diamètre intérieur étant déterminé dans un plan perpendiculaire audit axe de symétrie de révolution (8).

10. Méthode pour déterminer une pluralité de diamètres d'un élément de turbomachine (1) présentant un axe de symétrie de révolution (8), et comprenant :
- une paroi latérale extérieure (9) symétrique autour dudit axe de révolution (8) et délimitant un creux ouvert (3) dudit élément de turbomachine (1) ;
- une paroi latérale intérieure (4) symétrique autour dudit axe de révolution (8), située dans ledit creux ouvert (3), reliée à ladite paroi latérale extérieure (9) par un élément radial (7) et comprenant une surface interne (5) délimitant un creux interne ouvert (33) de l'élément de turbomachine (1) ;
ladite pluralité de diamètres étant déterminée dans différents plans perpendiculaires audit axe de symétrie de révolution (8) ;
ladite méthode comprenant les étapes de la revendication précédente et comprenant en outre les étapes suivantes :
l. configurer la première source lumineuse (11) pour envoyer un faisceau à un endroit de la surface interne (5) différent de l'endroit sur lequel le faisceau lumineux généré à l'itération de l'étape e. précédente est envoyé et configurer le premier capteur optique (12) pour acquérir la réflexion dudit faisceau optique envoyé audit endroit de la surface interne (5) différent, dans un plan parallèle audit axe de symétrie de révolution (8) ;
m. exécuter les étapes a. à k. de la revendication précédente ;
n. répéter les étapes I. à m. M fois où M est un entier ;
o. fournir des valeurs de ladite pluralité de diamètres intérieurs de l'élément de turbomachine (1) dans lesdits différents plans perpendiculaires audit axe de symétrie de révolution (8) et correspondant aux différents endroits le long dudit axe de symétrie de révolution (8) imposés à l'étape I..

11. Méthode selon l'une quelconque des deux revendications précédentes **caractérisée en ce que** ledit élément de turbomachine (1) est un étage statorique d'une turbomachine, **en ce que** ladite paroi latérale extérieure (9) est une virole extérieure, **en ce que** ladite paroi latérale intérieure (4) est une virole interne et **en ce que** ledit élément radial (7) est une aube.

12. Méthode selon l'une quelconque des trois revendications précédentes **caractérisée en ce que** ledit support (13) a une position fixe.

13. Méthode selon la revendication 9 pour déterminer une pluralité de diamètres intérieurs d'un élément de turbomachine (1) **caractérisée en ce que** :
- la première source lumineuse (11) est apte à être activée et à éclairer ladite surface interne (5) à différents endroits pour une même position du dispositif de mesure optique (10) ;
- le premier capteur optique (12) est apte à acquérir des signaux lumineux issus de réflexions de faisceaux lumineux générés par la première source lumineuse (11) et **en ce que** ;
- l'étape g. consiste à convertir lesdits signaux lumineux de l'étape f. en une pluralité de valeurs dudit diamètre intérieur.

14. Méthode selon l'une quelconque des cinq revendications précédentes, **caractérisée en ce que** l'étape c. comprend les étapes suivantes :
- éclairer à l'aide de ladite première source lumineuse (11) ladite paroi latérale extérieure (9) ;
- acquérir à l'aide dudit premier capteur (12) un signal lumineux de calibration issu d'une réflexion sur la paroi latérale extérieure (9) du faisceau lumineux généré à l'étape précédente ;
- associer à une extrémité du signal lumineux de calibration de l'étape précédente une position dudit plan de référence.

## Patentansprüche

1. Kontaktloses Messsystem (100) einer Vielzahl von inneren geometrischen Kreisparametern eines Turbomaschinenelements (1), das eine Rotationssymmetrieachse (8) aufweist, umfassend:
- das Turbomaschinenelement (1), umfassend:
- eine um die Rotationssymmetrieachse (8) herum symmetrische und eine hohle Öffnung (3) des Turbomaschinenelements (1) begrenzende äußere Seitenwand (9);
- eine um die Rotationssymmetrieachse (8) herum symmetrische innere Seitenwand (4), die sich in der hohlen Öffnung (3) befindet, mit der äußeren Seitenwand (9) durch ein radiales Element (7) verbunden und umfassend eine Innenoberfläche (5), die eine interne hohle Öffnung (33) des Turbomaschinenelements (1) begrenzt;
- ein kontaktloses Messmodul, umfassend:
- einen Träger (13) zum Stützen des Turbomaschinenelements (1);
- eine optische Messvorrichtung (10) zum Aussenden mehrerer Lichtstrahlenbündel auf die mindestens eine Innenoberfläche (5) der inneren Seitenwand (4) und Akquirieren mehrerer von den mehreren Lichtstrahlenbündeln stammenden Reflexionen, wobei die optische Messvorrichtung (10) ein Turm ist, der mechanisch mit dem Träger (13) gekoppelt ist und umfasst:
- eine erste Lichtquelle (11) zum Aussenden der mehreren Lichtstrahlenbündel;
- einen ersten optischen Sensor (12) zum Akquirieren der mehreren Reflexionen;
- mechanische Stützmittel (14), auf zentrierte Weise auf der Rotationssymmetrieachse (8) des zu messenden Turbomaschinenelements (1) positioniert, zum Stützen der ersten Lichtquelle (11) und des ersten optischen Sensors (12), wobei die mechanischen Stützmittel (14) mit dem Träger (13) in Kontakt stehen und auf dem Träger (13) ruhen;
- wobei die erste Lichtquelle (11) und der erste optische Sensor (12) geeignet sind, in die interne hohle Öffnung (33) eingesetzt zu werden;
- eine elektronische Umwandlungseinheit (16) zum Umwandeln mehrerer Signale des ersten optischen Sensors (12) in mehrere Werte der Vielzahl von inneren geometrischen Kreisparametern.

2. System (100) nach dem vorstehenden Anspruch, **dadurch gekennzeichnet, dass** der Träger (13) eine feste Position aufweist.

3. System (100) nach einem der vorstehenden Ansprüche, **dadurch gekennzeichnet, dass** die optische Messvorrichtung (10) weiter eine zweite Lichtquelle oder eine zweite und eine dritte Lichtquelle zum Aussenden mehrerer zusätzlicher Lichtstrahlenbündel auf mindestens die Innenoberfläche (5) der inneren Seitenwand (4) und einen zweiten optischen Sensor oder einen zweiten und einen dritten optischen Sensor zum Akquirieren mehrerer von den mehreren zusätzlichen Lichtstrahlenbündeln stammenden Reflexionen umfasst, die von der zweiten Lichtquelle oder von der zweiten und dritten Lichtquelle ausgesendet wurden, gestützt von den mechanischen Stützmitteln (14) und geeignet, um in die interne hohle Öffnung (33) eingesetzt zu werden,
und dadurch, dass die elektronische Umwandlungseinheit (16) weiter konfiguriert ist zum Umwandeln der mehreren Signale des zweiten und dritten optischen Sensors (12) in mehrere Werte der Vielzahl von inneren geometrischen Kreisparametern.

4. System (100) nach einem der vorstehenden Ansprüche, **dadurch gekennzeichnet, dass** die Vielzahl von inneren geometrischen Kreisparametern die Bestimmung eines inneren Durchmessers des Turbomaschinenelements (1), das eine Rotationssymmetrieachse (8) aufweist, gestattet.

5. System (100) nach einem der vorstehenden Ansprüche, **dadurch gekennzeichnet, dass** das Turbomaschinenelement (1) eine Statorstufe einer Turbomaschine ist, dadurch, dass die äußere Seitenwand (9) ein Außenmantel ist, dadurch, dass die innere Seitenwand (4) ein Innenmantel ist und dadurch, dass das radiale Element (7) eine Schaufel ist.

6. System (100) nach einem der vorstehenden Ansprüche, **dadurch gekennzeichnet, dass** die optische Messvorrichtung (10) und der Träger (13) auf unlösbare Weise gekoppelt sind.

7. System (100) nach einem der vorstehenden Ansprüche, **dadurch gekennzeichnet, dass** die optische Messvorrichtung von der Rotationssymmetrieachse (8) durchquert wird.

8. System (100) nach einem der vorstehenden Ansprüche, **dadurch gekennzeichnet, dass** die Innenoberfläche (5) mindestens teilweise mit einer Bahn (6) aus Kunststoffmaterial beschichtet ist.

9. Verfahren zum Bestimmen eines inneren Durchmessers eines Turbomaschinenelements (1), das eine Rotationssymmetrieachse (8) aufweist und umfasst:
- eine um die Rotationssymmetrieachse (8) herum symmetrische und eine hohle Öffnung (3) des Turbomaschinenelements (1) begrenzende äußere Seitenwand (9);
- eine um die Rotationssymmetrieachse (8) herum symmetrische innere Seitenwand (4), die sich in der hohlen Öffnung (3) befindet, mit der äußeren Seitenwand (9) durch ein radiales Element (7) verbunden und umfassend eine Innenoberfläche (5), die eine interne hohle Öffnung (33) des Turbomaschinenelements (1) begrenzt;
wobei das Verfahren die folgenden Schritte umfasst:
a. Bereitstellen eines Trägers (13) zum Stützen des Turbomaschinenelements (1) und einer optischen Messvorrichtung (10), die ein Turm ist, und die umfasst:
- eine erste Lichtquelle (11) zum Aussenden mindestens eines Lichtstrahlenbündels;
- einen ersten optischen Sensor (12) zum Detektieren mindestens eines von der ersten Lichtquelle (11) stammenden Lichtsignals;
- mechanische Stützmittel (14), auf zentrierte Weise auf der Rotationssymmetrieachse (8) des zu messenden Turbomaschinenelements (1) positioniert, die die erste Lichtquelle (11) und den ersten optischen Sensor (12) stützen, wobei die mechanischen Stützmittel (14) mit dem Träger (13) in Kontakt stehen und auf dem Träger (13) ruhen;
b. Positionieren des Turbomaschinenelements (1) auf dem Träger (13) derart, dass die erste Lichtquelle (11) geeignet ist, die Innenoberfläche (5) mindestens teilweise zu beleuchten;
c. Bestimmen einer senkrechten Referenzebene zu der Rotationssymmetrieachse (8);
d. Bestimmen eines ersten Abstands bezogen auf die Referenzebene, der einer Stelle der durch die erste Lichtquelle (11) beleuchteten Innenoberfläche (5) entspricht;
e. Aktivieren der ersten Lichtquelle (11) zum Aussenden eines Lichtstrahlenbündels auf die Innenoberfläche (5);
f. Akquirieren, mittels des ersten optischen Sensors (12), eines Lichtsignals, das von der Reflexion des im vorstehenden Schritt erzeugten Lichtstrahlenbündels stammt;
g. Umwandeln des im vorstehenden Schritt erhaltenen Signals in einen Wert eines inneren geometrischen Kreisparameters bei dem ersten Abstand bezogen auf die in Schritt d. bestimmte Referenzebene
h. Konfigurieren der ersten Lichtquelle (11) zum Aussenden eines Strahlenbündels an eine Stelle der Innenoberfläche (5), die sich von der Stelle unterscheidet, auf die das bei der Iteration von vorstehendem Schritt e. erzeugte Lichtstrahlenbündel ausgesendet wird, und Konfigurieren des ersten optischen Sensors (12) zum Akquirieren der Reflexion des optischen Strahlenbündels, das an die unterschiedliche Stelle der Innenoberfläche (5) ausgesendet wurde, in einer Ebene senkrecht zu der Rotationssymmetrieachse (8);
i. Wiederholen der Schritte e. bis g.;
j. Wiederholen der Schritte h. und i. N-mal, wobei N eine ganze Zahl ist;
k. Bestimmen des inneren Durchmessers ausgehend von einem Maximalwert des Werts des in Schritt g. von jeder Iteration bestimmten inneren geometrischen Kreisparameters,
wobei der innere Durchmesser in einer Ebene senkrecht zur Rotationssymmetrieachse (8) bestimmt wird.

10. Verfahren zum Bestimmen einer Vielzahl von Durchmessern eines Turbomaschinenelements (1), das eine Rotationssymmetrieachse (8) aufweist und umfasst:
- eine um die Rotationsachse (8) herum symmetrische und eine hohle Öffnung (3) des Turbomaschinenelements (1) begrenzende äußere Seitenwand (9);
- eine um die Rotationsachse (8) herum symmetrische innere Seitenwand (4), die sich in der hohlen Öffnung (3) befindet, mit der äußeren Seitenwand (9) durch ein radiales Element (7) verbunden und umfassend eine Innenoberfläche (5), die eine interne hohle Öffnung (33) des Turbomaschinenelements (1) begrenzt;
wobei die Vielzahl von Durchmessern in unterschiedlichen senkrechten Ebenen zur Rotationssymmetrieachse (8) bestimmt wird;
wobei das Verfahren die Schritte des vorstehenden Anspruchs umfasst und weiter die folgenden Schritte umfasst:
I. Konfigurieren der ersten Lichtquelle (11) zum Aussenden eines Strahlenbündels an eine Stelle der Innenoberfläche (5), die sich von der Stelle unterscheidet, auf die das bei der Iteration von vorstehendem Schritt e. erzeugte Lichtstrahlenbündel ausgesendet wird, und Konfigurieren des ersten optischen Sensors (12) zum Akquirieren der Reflexion des optischen Strahlenbündels, das an die unterschiedliche Stelle der Innenoberfläche (5) ausgesendet wurde, in einer Ebene senkrecht zu der Rotationssymmetrieachse (8);
m. Ausführen der Schritte a. bis k. des vorstehenden Anspruchs;
n. Wiederholen der Schritte I. bis m. M-mal, wobei M eine ganze Zahl ist;
o. Bereitstellen von Werten der Vielzahl von inneren Durchmessern des Turbomaschinenelements (1) in den unterschiedlichen senkrechten Ebenen zu der Rotationssymmetrieachse (8) und entsprechend den in Schritt I. vorgegebenen unterschiedlichen Stellen entlang der Rotationssymmetrieachse (8).

11. Verfahren nach einem der zwei vorstehenden Ansprüche, **dadurch gekennzeichnet, dass** das Turbomaschinenelement (1) eine Statorstufe einer Turbomaschine ist, dadurch, dass die äußere Seitenwand (9) ein Außenmantel ist, dadurch, dass die innere Seitenwand (4) ein Innenmantel ist und dadurch, dass das radiale Element (7) eine Schaufel ist.

12. Verfahren nach einem der drei vorstehenden Ansprüche, **dadurch gekennzeichnet, dass** der Träger (13) eine feste Position aufweist.

13. Verfahren nach Anspruch 9 zum Bestimmen einer Vielzahl von inneren Durchmessern eines Turbomaschinenelements (1), **dadurch gekennzeichnet, dass**:
- die erste Lichtquelle (11) geeignet ist, aktiviert zu werden und die Innenoberfläche (5) für eine gleiche Position der optischen Messvorrichtung (10) an unterschiedlichen Stellen zu beleuchten
- der erste optische Sensor (12) geeignet ist, Lichtsignale zu akquirieren, die von den durch die erste Lichtquelle (11) erzeugten Reflexionen von Lichtstrahlenbündeln stammen, und dadurch, dass;
- der Schritt g. im Umwandeln der Lichtsignale von Schritt f. in eine Vielzahl von Werten des inneren Durchmessers besteht.

14. Verfahren nach einem der fünf vorstehenden Ansprüche, **dadurch gekennzeichnet, dass** der Schritt c. die folgenden Schritte umfasst:
- Beleuchten der äußeren Seitenwand (9) mithilfe der ersten Lichtquelle (11);
- Akquirieren eines von einer Reflexion des im vorstehenden Schritt erzeugten Lichtstrahlenbündels auf der äußeren Seitenwand (9) stammenden Kalibrierungslichtsignals mithilfe des ersten Sensors (12);
- Zuordnen einer Position der Referenzebene an einen Endbereich des Kalibrierungslichtsignals des vorstehenden Schritts.

## Claims

1. System for contactless measurement (100) of a plurality of internal circular geometric parameters of a turbine engine element (1) having a rotational axis of symmetry (8), comprising:
- said turbine engine element (1) comprising:
- a symmetrical outer lateral wall (9) about said rotational axis of symmetry (8) and delimiting a blind cavity (3) of said turbine engine element (1);
- a symmetrical inner lateral wall (4) about said rotational axis of symmetry (8), located in said blind cavity (3), connected to said outer lateral wall (9) by a radial element (7) and comprising an inner surface (5) delimiting a blind inner cavity (33) of the turbine engine element (1);
- a module for contactless measurement comprising:
- a support (13) for supporting said turbine engine element (1);
- an optical measuring device (10) for transmitting several light beams on at least said inner surface (5) of said inner lateral wall (4) and acquiring several reflections coming from said several light beams, the optical measuring device (10) being a tower, being mechanically coupled to said support (13) and comprising:
- a first light source (11) for transmitting said several light beams;
- a first optical sensor (12) for acquiring said several reflections;
- means of mechanical support (14) positioned centrally on the rotational axis of symmetry (8) of the turbine engine element (1) to be measured, to support said first light source (11) and said first optical sensor (12), said means of mechanical support (14) being in contact with said support (13) and resting on said support (13);
- said first light source (11) and said first optical sensor (12) being able to be inserted into said blind inner cavity (33);
- an electronic conversion unit (16) for converting several signals from said first optical sensor (12) into several values of said plurality of internal circular geometric parameters.

2. System (100) according to the preceding claim, **characterised in that** said support (13) has a fixed position.

3. System (100) according to any one of the preceding claims, **characterised in that** the optical measuring device (10) further comprises a second light source or a second and a third light source for transmitting several additional light beams on at least said inner surface (5) of said inner lateral wall (4) and a second optical sensor or a second and a third optical sensors for acquiring several reflections coming from said several additional light beams transmitted by said second light source or by said second and third light sources, supported by said means of mechanical support (14) and being able to be inserted into said blind inner cavity (33),
and **in that** said electronic conversion unit (16) is further configured to convert said several signals from said second and third optical sensors (12) into several values of said plurality of internal circular geometric parameters.

4. System (100) according to any one of the preceding claims, **characterised in that** said plurality of internal circular geometric parameters allows for the determining of an inner diameter of said turbine engine element (1) having a rotational axis of symmetry (8).

5. System (100) according to any one of the preceding claims, **characterised in that** said turbine engine element (1) is a stator stage of a turbine engine, **in that** said outer lateral wall (9) is an outer ferrule, **in that** said inner lateral wall (4) is an inner ferrule and **in that** said radial element (7) is a blade.

6. System (100) according to any one of the preceding claims, **characterised in that** the optical measuring device (10) and said support (13) are irremovably coupled.

7. System (100) according to any one of the preceding claims, **characterised in that** the optical measuring device is passed through by said rotational axis of symmetry (8).

8. System (100) according to any one of the preceding claims, **characterised in that** the inner surface (5) is coated at least partially with a track (6) made of plastic material.

9. Method for determining an inner diameter of a turbine engine element (1) having a rotational axis of symmetry (8) and comprising:
- a symmetrical outer lateral wall (9) about said rotational axis of symmetry (8) and delimiting a blind cavity (3) of said turbine engine element (1);
- a symmetrical inner lateral wall (4) about said rotational axis of symmetry (8), located in said blind cavity (3), connected to said outer lateral wall (9) by a radial element (7) and comprising an inner surface (5) delimiting a blind inner cavity (33) of the turbine engine element (1);
said method comprising the following steps:
a. supplying a support (13) for supporting said turbine engine element (1) and an optical measuring device (10), which is a tower, and which comprises:
- a first light source (11) for transmitting at least one light beam;
- a first optical sensor (12) for detecting at least one light signal coming from the first light source (11);
- means of mechanical support (14) positioned centrally on the rotational axis of symmetry (8) of the turbine engine element (1) to be measured, supporting said first light source (11) and said first optical sensor (12), the means of mechanical support (14) being in contact with said support (13) and resting on said support (13);
b. positioning said turbine engine element (1) on said support (13) in such a way that said first light source (11) is able to illuminate at least partially said inner surface (5);
c. determining a reference plane perpendicular to said rotational axis of symmetry (8);
d. determining a first distance with respect to said reference plane corresponding to a location of said inner surface (5) illuminated by said first light source (11);
e. activating said first light source (11) for transmitting a light beam on said inner surface (5);
f. acquiring via said first optical sensor (12) a light signal coming from the reflection of said light beam generated in the preceding step;
g. converting the signal obtained in the preceding step into a value of internal circular geometric parameter at said first distance with respect to said reference plane determined in step d.
h. configuring the first light source (11) for transmitting a beam to a location of the inner surface (5) that is different from the location on which the light beam generated at the iteration of the preceding step e. is transmitted and configuring the first optical sensor (12) for acquiring the reflection of said optical beam transmitted to said location of the different inner surface (5), in a plane perpendicular to said rotational axis of symmetry (8);
i. repeating steps e. to g.;
j. repeating steps h. and i. N times where N is an integer;
k. determining the inner diameter using a maximum value of said value of the internal circular geometric parameter determined in step g. of each iteration;
said inner diameter being determined in a plane perpendicular to said rotational axis of symmetry (8).

10. Method for determining a plurality of diameters of a turbine engine element (1) having a rotational axis of symmetry (8), and comprising:
- a symmetrical outer lateral wall (9) about said rotational axis (8) and delimiting a blind cavity (3) of said turbine engine element (1);
- a symmetrical inner lateral wall (4) about said axis of revolution (8), located in said blind cavity (3), connected to said outer lateral wall (9) by a radial element (7) and comprising an inner surface (5) delimiting a blind inner cavity (33) of the turbine engine element (1);
said plurality of diameters being determined in different planes perpendicular to said rotational axis of symmetry (8);
said method comprising the steps of the preceding claim and further comprising the following steps:
I. configuring the first light source (11) for transmitting a beam to a location of the inner surface (5) different from the location on which the light beam generated at the iteration of the preceding step e. is transmitted and configuring the first optical sensor (12) for acquiring the reflection of said optical beam transmitted to said location of the different inner surface (5), in a plane parallel to said rotational axis of symmetry (8);
m. executing steps a. to k. of the preceding claim;
n. repeating steps I. to m. M times where M is an integer;
o. supplying values of said plurality of inner diameters of the turbine engine element (1) in said different planes perpendicular to said rotational axis of symmetry (8) and corresponding to the different locations along said rotational axis of symmetry (8) imposed in step I.

11. Method according to any one of the two preceding claims, **characterised in that** said turbine engine element (1) is a stator stage of a turbine engine, **in that** said outer lateral wall (9) is an outer ferrule, **in that** said inner lateral wall (4) is an inner ferrule and **in that** said radial element (7) is a blade.

12. Method according to any one of the three preceding claims, **characterised in that** said support (13) has a fixed position.

13. Method according to claim 9 for determining a plurality of inner diameters of a turbine engine element (1) **characterised in that**:
- the first light source (11) is able to be activated and to illuminate said inner surface (5) at different locations for the same position of the optical measuring device (10);
- the first optical sensor (12) is able to acquire light signals coming from reflections of light beams generated by the first light source (11) and **in that**;
- step g. consists of converting said light signals from step f. into a plurality of values of said inner diameter.

14. Method according to any one of the five preceding claims, **characterised in that** step c. comprises the following steps:
- illuminating using said first light source (11) said outer lateral wall (9);
- acquiring using said first sensor (12) a calibration light signal coming from a reflection on the outer lateral wall (9) of the light beam generated in the preceding step;
- associating with an end of the calibration light signal of the preceding step a position of said reference plane.
